# EUROPÄISCHE PATENTSCHRIFT

(11) **EP 1 078 890 B1**
(45) Veröffentlichungstag und Bekanntmachung des Hinweises auf die Patenterteilung: **28.12.2005**
(21) Anmeldenummer: 00117617.1
(22) Anmeldetag: 16.08.2000
(51) Int. Cl.: C03B 5/225

(54) **Vorrichtung und Verfahren für das Läutern von Gläsern oder Glaskeramiken**
Apparatus and process for refining glasses or glass ceramics
Dispositif et procédé d'affinage de verres ou de vitrocéramiques

(30) Priorität: 21.08.1999 DE 19939773
(43) Veröffentlichungstag der Anmeldung: 28.02.2001
(73) Patentinhaber: Schott AG, 55122 Mainz (DE)
(72) Erfinder: Kiefer, Werner, Dr., 55126 Mainz (DE); Römer, Hildegard, Dr., 61184 Karben (DE); Kolberg, Uwe, Dr., 55252 Mainz-Kastel (DE); Schmitt, Stefan, 55271 Stadecken-Elsheim (DE); Schmidbauer, Wolfgang, Dr., 55126 Mainz (DE)
(74) Vertreter: Weitzel, Wolfgang

(56) Entgegenhaltungen:
- EP-A- 0 079 266
- US-A- 3 244 495
- US-A- 3 951 635
- US-A- 4 195 982
- PETROV, YU.B. ET AL.: "continuous casting glass melting in a cold crucible induction furnace" XV INTERNATIONAL CONGRESS ON GLASS 1989, PROCEEDINGS, Bd. 3a, 1989, Seiten 72-77, XP000075308 leningrad, su
- PATENT ABSTRACTS OF JAPAN vol. 6, no. 180, 14. September 1982 (1982-09-14) -& JP 57 095834 A (NIHON ITA GLASS CO. LTD.), 14. Juni 1982 (1982-06-14)

## Beschreibung

Die Erfindung betrifft eine Vorrichtung und ein Verfahren für das Läutern von Gläsern oder Glaskeramiken.

Zur kontinuierlichen Läuterung von Glas werden Schmelzwannen betrieben, die einen Einschmelzbereich, einen Läuterbereich und einen Absteh- und Homogenisierungsbereich haben. Die eigentliche Entgasung der Glasschmelze erfolgt üblicherweise in der Läuterzone. Hier laufen Redox-Reaktionen oder Verdampfungseffekte ab, die zur Blasenbildung beziehungsweise dem Aufblähen vorhandener Blasen führen. Die Temperatur in der Läuterzone wird möglichst hoch gewählt, damit die Blasen zügig an die Schmelzoberfläche aufsteigen können und die Schmelze blasenfrei wird. Dabei sind klassische Wannen aufgrund des Wandmaterials, das in der Regel aus Feuerfestkeramik oder Platin beziehungsweise Platinlegierungen besteht, begrenzt auf maximal zulässige Temperaturen im Läuterbereich von 1650°C.

Es sind zahlreiche Vorrichtungen bekannt geworden, mit denen Glas erschmolzen oder geläutert werden können. Siehe zum Beispiel EP 0 528 025 B1. Dabei handelt es sich um einen sogenannten Skulltiegel mit einer gekühlten Tiegelwandung. Die Tiegelwandung ist aus einem Kranz von vertikalen Metallrohren aufgebaut, die einen gegenseitigen Abstand aufweisen und von einem Kühlmedium durchströmt sind. Der Tiegel ist von einer Induktionsspule umgeben, über welche Hochfrequenzenergie in den Tiegelinhalt einkoppelbar ist. Damit läßt sich der Tiegelinhalt auf außerordentlich hohe Temperaturen bringen, die bis zu 3000°C reichen.

Darüber hinaus offenbart US-A-3 951 635 einen zweistufigen Schmelzprozeß mit anschlißender Läuterung.

Der Läutervorgang erfordert besonders hohe Temperaturen. Versuche haben gezeigt, daß sich die Aufstiegsgeschwindigkeit der Blasen bei Steigerung der Schmelzentemperatur deutlich erhöht. Die Hochtemperatur-Läuterung bildet somit die Möglichkeit, entweder die Läuterzeit drastisch zu senken, oder auf den Zusatz von Läutermitteln zur Erzeugung großer Läuterblasen zu verzichten. Gerade bei hochschmelzenden Gläsern wären höhere Läutertemperaturen besonders wünschenswert.

Der Erfindung liegt die Aufgabe zugrunde, eine Vorrichtung und ein Verfahren gemäß der eingangs beschriebenen Art derart weiterzuentwickeln, daß der Läutervorgang intensiviert wird.

Diese Aufgabe wird durch die Merkmale der unabhängigen Ansprüche gelöst.

Die Erfinderin hat folgendes erkannt: der Läuterprozeß läßt sich wesentlich effizienter gestalten, wenn er nicht in einem einzigen, sondern in wenigstens zwei Gefäßen durchgeführt wird, die in Reihe geschaltet sind. Die Glasqualität wird nochmals deutlich verbessert, wenn man die Schmelze nicht nur in einem ersten Läutergefäß auf sehr hohe Temperaturen erwärmt und dann abkühlt, sondern in einem zweiten Gefäß erneut aufheizt, und dann abkühlen läßt.

Durch Hintereinanderschalten zweier Läuterzonen hat man auch die Möglichkeit, die beiden dort stattfindenden Läuterprozesse unter unterschiedlichen Bedingungen ablaufen zu lassen, und dabei verschiedene Läutermittel an verschiedenen Stellen einzusetzen.

Die Läutergefäße können sowohl stehende Skulltiegel sein, als auch Rinnen. Auch kann ein stehender Skulltiegel mit einer Rinne kombiniert werden. Die Rinne kann ebenfalls nach Art eines Skulltiegels gestaltet sein. Sie ist in jedem Falle aus einem Kranz von Metallrohren aufgebaut, die an ein Kühlmittel angeschlossen sind. In jedem Falle sind sie voll von den Windungen einer HF-Spule umgeben.

Verlaufen die gekühlten Metallrohre der Rinne horizontal, so wird man die Windungen der HF-Spule derart um die Rohre herumlegen, daß die Tiegelachse horizontal verläuft. Sind die gekühlten Metallrohre jedoch stehend angeordnet, so legt man die Windungen der HF-Spule derart um die Rohre, daß die Mittelachse im wesentlichen vertikal verläuft.

Die Erfindung ist anhand der Zeichnung näher erläutert. Darin ist im einzelnen folgendes dargestellt:
- Figur 1: zeigt eine Vorrichtung mit einer Einschmelzwanne, einem stehenden Läutertiegel 1 und einer Läuterrinne 2.
- Figur 2: zeigt eine Vorrichtung mit einer Einschmelzwanne und zwei stehenden Läutertiegeln.
- Figur 3: zeigt eine Vorrichtung mit einer Einschmelzwanne und zwei Läuterrinnen.
- Figur 4: zeigt eine Vorrichtung mit einer Einschmelzwanne und einer daran anschließenden Läuterrinne.

In allen vier Fällen ist die Einschmelzwanne 1 eine gemauerte Wanne aus keramischem Material.

Eine Verbindungsleitung 2 stellt eine leitende Verbindung zwischen der Einschmelzwanne 1 und dem nachgeschalteten Läutergefäß 3 her. Wie man sieht, tritt die Verbindungsleitung 2 aus der Einschmelzwanne 1 aus deren Bodenbereich aus, und in den Bodenbereich des ersten Läutergefäßes 3 ein.

Das erste Läutergefäß 3 ist nach Art eines Skulltiegels aufgebaut. Es ist aus einem Kranz von vertikalen, flüssigkeitsgekühlten Metallrohren gebildet, die hier nicht im einzelnen dargestellt sind. Der Kranz von Metallrohren ist umgeben von den Windungen 3.1 einer Hochfrequenzeinrichtung.

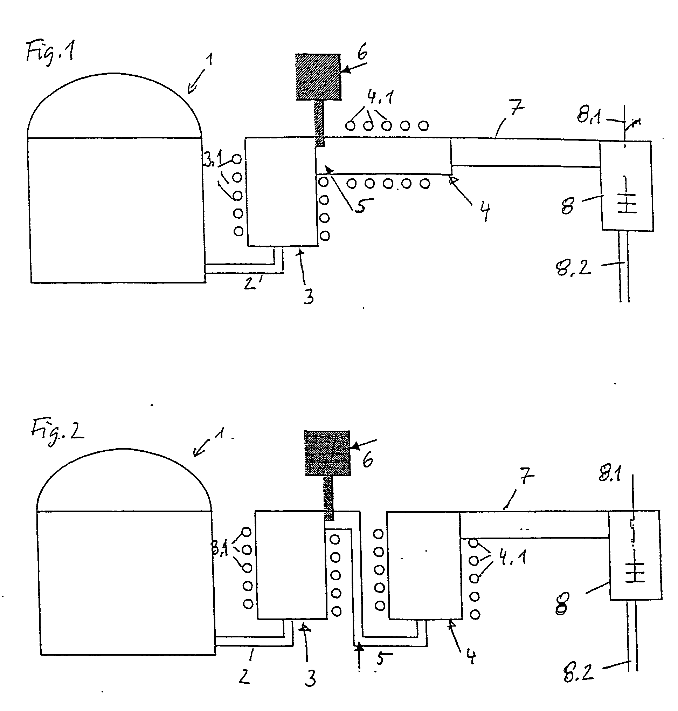

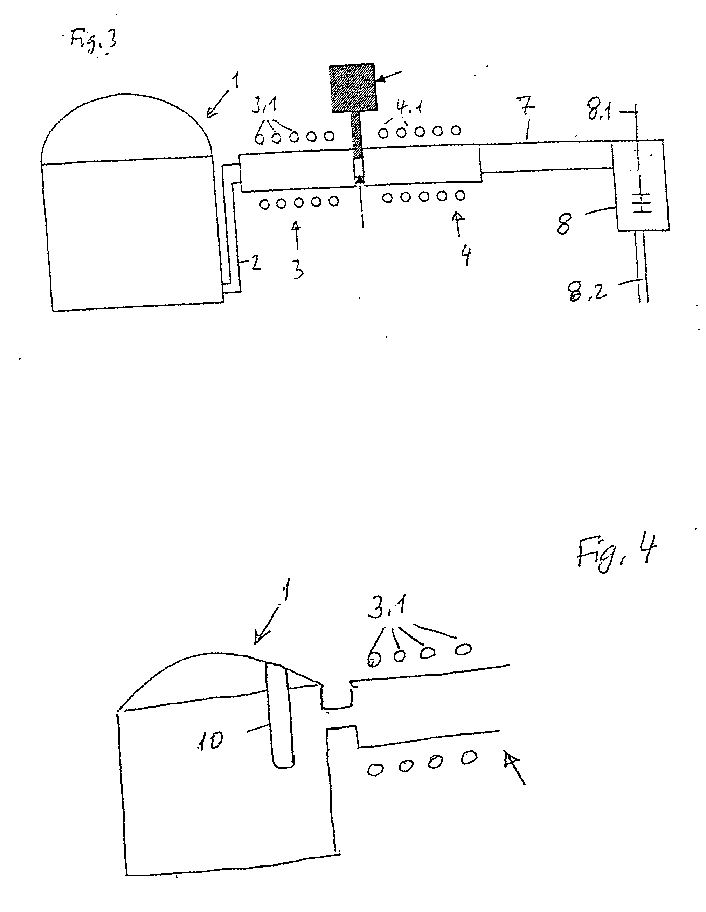

Durch die Anordnung der Verbindungsleitung 2 in der beschriebenen Weise ergibt sich bei der Ausführungsform gemäß der Figuren 1 und 2 der folgende Vorteil:
Die Schmelze ist im Bodenbereich der Einschmelzwanne 1 relativ kalt. Nach ihrem Eintritt in den Bodenbereich des Skulltiegels 3 wird sie durch die HF-Einrichtung 3.1 erhitzt und steigt nach oben. Im oberen Bereich ist sie dann derart heiß, daß die Gasblasen aufgrund der geringen Viskosität der Schmelze aufplatzen und austreten können.

Bei der Ausführungsform gemäß Figur 1 ist ein zweites Läutergefäß in Gestalt einer Rinne 4 dem ersten Läutergefäß 3 nachgeschaltet. Es folgt somit auf das stehende Läutergefäß 3 ein liegendes Läutergefäß 4. Die Rinne 4 ist wiederum nach Art eines Skulltiegels gestaltet. Sie weist demgemäß einen Kranz von horizontal verlaufenden Metallrohren auf, der kreisförmig sein kann. Dieser Kranz von Metallrohren ist wiederum von Windungen 4.1 einer HF-Spule umgeben. Die Wickelachse der Spulenwindungen verläuft dem gemäß ebenfalls horizontal.

Die Art des Überführens der Schmelze vom Skulltiegel 3 zur Skullrinne 4 ist hier nicht dargestellt. Die Schmelze kann entweder im Bereich der Oberkante der Skullrinne 4 überströmen, beispielsweise über einen Damm. Sie kann aber auch im Bereich der Unterkante der Skullrinne 4 überströmen, beispielsweise durch eine Verbindungsleitung.

Zwischen den beiden Läutergefäßen 3, 4 besteht die Möglichkeit, Sauerstoff in Form von Blasen einzuführen (sogenanntes Sauerstoff-Bubbling). Siehe Pfeil 5. Es besteht aber auch die Möglichkeit, statt dessen oder zusätzlich aktive Läutermittel zuzuführen. Siehe Pfeil 6.

An die Skullrinne 4 schließt sich eine Abkühlrinne 7 an. An die Abkühlrinne 7 schließt sich ein Konditionierbehälter 8 mit Rührer 8.1 und Auslauf 8.2 an. Der Vorgang in der Vorrichtung gemäß Figur 1 soll im folgenden nochmals genauer beschrieben werden. Dabei wird das erste Läutergefäß 3 als "Topf" bezeichnet, und das zweite Läutergefäß 4 als "Rinne".

Im Topf erfolgt eine Kombination aus chemischer Läuterung durch ein entsprechend gewähltes Redox- oder Verdampfungsläutermittel mit maximaler Gasabgabe im Temperaturbereich des Topfes und einem physikalischen Läutereffekt aufgrund der durch die bei hohen Temperaturen niedrigen Viskosität, der daraus resultierenden hohen Blasenaufstiegsgeschwindigkeit und der großen Konvektion. In der Rinne erfolgt bei vergleichbaren Läutertemperaturen in erster Linie eine physikalische Läuterung des Glases, die hier besonders effektiv ist aufgrund der Kombination von starker Konvektion und niedriger Badtiefe. Bei Verwendung vergleichbarer Läutertemperaturen im Topf und Rinne sind am Ende des ersten Läuterschrittes die Blasen um ca. den Faktor 1000 geringer als vor der HF-Läuterung. Durch die zweite Läuterkammer erfolgt eine weitere Entgasung, die zwar aufgrund des Verbrauches des Läutermittels durch die erste Zone nur noch eine Reduktion der Blasenzahlen um ca. den Faktor 10 bis 100 bewirkt, aber eben immer noch die physikalische Läuterung, die bei den hohen Schmelztemperaturen und niedrigen Viskositäten eine wichtige Rolle spielt, als positiven Effekt, beinhaltet.

Eine weitere Steigerung der Läutereffektivität dieser Doppelanordnung kann durch Zugabe von zwei verschiedenen Läutermitteln erfolgen, wobei das eine Läutermittel im Topf bei Temperatur T (1) und das zweite Läutermittel in der Rinne bei einer Temperatur T (2) aktiviert wird und T (1) niedriger als T (2) ist. Beispiel hierfür ist der Zusatz von Zinnoxid und Titanoxid in einem Alumosilicatglas. Zinnoxid hat seine optimale Läutertemperatur bei ca. 1800 bis 1900°C. In diesem Temperaturbereich erfolgt noch keine Gasabgabe von Titanoxid (TiO2). Titanoxid läutert bei 2000 bis 2100°C. Stellt man nun die Läutertemperatur im ersten Läuterteil auf 1850°C ein und im zweiten Teil auf 2100°C so kann man beide hintereinander geschaltete Läuteraggregate optimal bezüglich chemischer und physikalischer Läuterung ausnutzen.

Prinzipiell könnten bei Gläsern mit niedriger Viskosität auch schon in der Einschmelzwanne 1 Läutereffekte auftreten, wenn die Einschmelztiegel beziehungsweise Teile davon auf einem für die Läuterreaktion günstigen Temperaturniveau liegen, so daß man die Einschmelzwanne 1 schon als erste Stufe einer Kaskadenläuterung ansehen könnte. Jedoch ist diese Anordnung aus folgendem Grund ungünstiger als die hier beschriebene Anordnung mit zwei oder mehr echten, vom Einschmelztiegel räumlich getrennten Läutereinheiten: Aufgrund der Strömungsverhältnisse (Gemengeeinlage oben, Glasabzug unten) wirkt die Bewegung der Glasmasse der Auftriebsbewegung der Blasen entgegen und wird aufsteigende Blasen immer wieder mit nach unten ziehen. Außerdem müßten die Blasen hier die kalte Gemengedecke durchstoßen, was normalerweise nicht gelingt oder man müßte die Oberfläche zwischenzeitlich blankschmelzen lassen, was einem hohen Durchsatz entgegensteht und damit unwirtschaftlich ist. Bei Gläsern mit hoher Viskosität ist eine Läuterung sowieso nicht zu erwarten, da die Badtiefe für einen Blasenaufstieg in einem Glas mit hoher Viskosität und damit geringer Aufstiegsgeschwindigkeit zu groß ist.

Eine weitere Verbesserung der Läuterung im Doppeltiegelsystem kann durch Aufoxidation des reduzierten Läutermittels vor Eintritt der Schmelze in die zweite Läuterphase erfolgen. Dies kann zum Beispiel durch Einbubbeln von Sauerstoff erfolgen.

Es ist vorteilhaft, wenn die Temperatur der Glasschmelze bei der Aufoxidation auf eine niedrigere Temperatur abgesenkt wird, bevor sie in der zweiten Läuterphase wieder angehoben wird.

Eine weitere Möglichkeit ist die Zuführung von aktivem Läutermittel in die Schmelze vor Beginn der zweiten Läuterphase. In diesem Fall hat man in der zweiten Läuterphase die gleiche Blasenreduktion wie in der ersten Läuterphase. Das heißt die Blasenzahl wird zweimal um den gleichen Faktor reduziert, was zum Beispiel bei Reduktion um den Faktor 10³ in einem Läuterteil, eine Gesamtreduktion der Blasenzahl um den Faktor 10⁶ bedeutet.

Bei der Vorrichtung gemäß Figur 2 ist das zweite Läutergefäß 4 ebenfalls ein Skulltiegel. Auch hier bestehen wieder die Möglichkeiten des Sauerstoff-Bubbling - Pfeil 5, oder der Zugabe von aktiven Läutermitteln - Pfeil 6. Auch hier ist wiederum eine Abkühlrinne 7 vorgesehen, ferner eine Konditioniervorrichtung 8 mit Rührer 8.1 und Auslaß 8.2.

Eine interessante Variante ist in Figur 3 beschrieben. Dort folgt auf die Einschmelzwanne 1 eine erste Läuterrinne 3 in Skullbauweise sowie eine zweite Läuterrinne 4, ebenfalls in Skullbauweise. Die übrigen Aggregate sind im wesentlichen die gleichen, wie bei den Vorrichtungen gemäß der Figuren 1 und 2.

Das Zuführen des aktiven Läutermittels kann, wie in Abb. 1-3 gezeigt, mittels eines Tiegels erfolgen, in dem ein geeignetes Glas mit einem hohen Gehalt an aktivem Läutermittel in situ hergestellt und direkt zugeführt wird. Natürlich kann man das Glas auch zunächst in Stangen oder andere geeignete Formate gießen, diese anstelle des Tiegels am selben Ort in die Schmelze einhängen und kontinuierlich nachführen. Die Anforderungen, die an das Läuterglas zu stellen sind, sind die folgenden:
* Das in dem Läuterglas vorhandene aktive Läutermittel kann ein Redoxläutermittel (As₂O₅, Sb₂O₅, SnO₂, TiO₂ und andere mehr) oder ein Verdampfungsläutermittel (NaCl, BaCl₂, ZnO und anderes mehr) sein.
* Das Läuterglas darf nur Komponenten enthalten, die in dem zu läuternden Glas auch enthalten sind oder dort nicht stören. Aufgrund der Tatsache, daß das Läuterglas dem zu läuternden Glas in einem Verdünnungsverhältnis 1:20 bis 1:100 zugeführt wird, können Minoritätskomponenten durchaus toleriert werden, da sie dann im fertigen Produkt in einer Konzentration vorliegen, die keine nennenswerten Auswirkungen auf die Produkteigenschaft haben.
* Das Läuterglas muß mit dem zu läuternden Glas bei der Injektionstemperatur mischbar sein.
* Das Läuterglas muß bei niedrigen Temperaturen schmelzbar sein, da hohe Temperaturen im allgemeinen zu einem unerwünschten vorzeitigen Verbrauch des Läutermittels führen. Dies kann u.a. durch einen hohen Anteil an Alkalioxiden, Boroxid oder Fluor bewirkt werden, wobei Alkalioxide den zusätzlichen Vorteil der Stabilisierung der höhervalenten Oxidationsstufen bei As und Sb bieten und Fluor den Zusatzvorteil der Verdampfungsläuterung.

Beispiele für diese Art von Gläsern sind im folgenden aufgeführt:

### Beispiel 1:

| | |
|---|---|
| B₂O₃ | 6,6% |
| Al₂O₃ | 5,5% |
| CaO | 27% |
| BaO | 23,0% |
| K₂O | 1% |
| As₂O₃ | 23,4% |
| F2-O | 13,5% |

Im Bedarfsfall kann As durch Sb ersetzt werden, allerdings sind dann die Konzentrationen der anderen Elemente gegebenenfalls neu einzustellen.

### Beispiel 2 (hier sind mehrere Gläser aus dem gleichen System

zusammengefaßt, die in den Konzentrationen der einzelnen Oxide variieren. Die angegebenen Grenzen folgen aus den konkreten Glaszusammensetzungen und stellen keine prinzipielle Beschränkung dar):

| | |
|---|---|
| SiO₂ | 45-54% |
| B₂O₃ | 14-20% |
| Al₂O₃ | 1-3% |
| ZnO | 0-5% |
| Na₂O | 0-3% |
| K₂O | 5-13% |
| Sb₂O₃ | 19-22% |

### Beispiel 3

| | |
|---|---|
| SiO₂ | 1-3% |
| B₂O₃ | 0-3% |
| BaO | 36-38% |
| La₂O₃ | 0-2% |
| ZrO₂ | 4-8% |
| TiO₂ | 50-54% |

Die angeführten Gläser sollen nur als Ausführungsbeispiele verstanden werden. Es ist noch eine Vielzahl weiterer Gläser denkbar, die anstelle der genannten verwendet werden können, wodurch sich jedoch am Verfahren nichts prinzipielles ändert.

Erfordert es die Glasqualität so ist eine Hintereinanderschaltung einer beliebigen Anzahl von Läutertiegeln denkbar und somit die Einstellung beliebig guter Glasqualitäten möglich. Optimierungsfaktor ist hier das Kosten-Nutzen-Verhältnis, da jede weitere Läuterstufe nicht nur eine Verbesserung der Qualität, sondern auch zusätzliche Kosten verursacht. Mit dem Konzept der Läuterkaskade kann allerdings jede geforderte Qualität eingestellt werden.

In allen beschriebenen Fällen sind die Wände der Läuteraggregate aus flüssigkeitsgekühlten metallischen Rohren oder luftgekühlten keramischen Teilen aufgebaut, die so beschaffen sind, daß sie für elektromagnetische Strahlung im Frequenzbereich 10 kHz bis 5 MHz transparent sind.

Die Beheizung der Läuterzonen erfolgt durch Einstrahlung von Hochfrequenzenergie in die Schmelze. Geeignete Frequenzbereich liegen dabei je nach Glastyp und Größe des Aggregates im Bereich 10 kHz bis 5 MHz. Als bevorzugter Bereich für die untersuchten Gläser erwies sich bei Läutervolumina von 50 bis 600 l der Frequenzbereich 100 kHz bis 1 MHz.

Bei der Ausführungsform gemäß Figur 4 erkennt man wiederum die Einschmelzwanne 1. An diese ist eine Läuterrinne 3 angeschlossen. Die Läuterrinne ist von Windungen 3.1 einer HF-Spule umgeben. Das besondere an dieser Ausführungsform besteht darin, daß das in der Einschmelzwanne 1 befindliche Gemenge durch einen Brückenwall 10 zurückgehalten wird.

## Patentansprüche

1. Vorrichtung für das Läutern von Glasschmelzen zur Herstellung von Gläsern und Glaskeramiken;
mit einer Einschmelzwanne (1) und
mit einer Länterkaskade mit wenigstens zwei Läutergefäßen (3, 4), die der Einschmelzwanne (1) nachgeschaltet ist; wobei
wenigstens eines der Läutergefäße nach dem Skull-Prinzip und somit aus einer Velzahl von gekühlten Metallrohren sowie einer Hochfrequenzeinrichtung zum induktiven Einkoppeln von Hochfrequenzenergie in den Inhalt des Läutergefäßes, aufgebaut ist.

2. Vorrichtung nach Anspruch 1, **dadurch gekennzeichnet, daß** wenigstens eines der Läutergefäße (3, 4) ein stehender Skulltiegel ist.

3. Vorrichtung nach Anspruch 1 oder 2, **dadurch gekennzeichnet, daß** die Verbindungsleitung (2) zwischen der Einschmelzwanne (1) und dem nachfolgenden Läutergefäß (3) in den Bodenbereich des nachfolgenden Läutergefäßes (3) mündet.

4. Vorrichtung nach einem der Ansprüche 1 bis 3, **dadurch gekennzeichnet, daß** die Verbindungsleitung zwischen zwei aufeinanderfolgenden Läutergefäßen (3, 4) an den oberen Bereich des stromaufwärtigen Läutergefäßes (3) angeschlossen ist und in den Bodenbereich des nächsten stromaufwärtigen Läutergefäßes (4) einmündet.

5. Vorrichtung nach einem der Ansprüche 1 bis 4, **dadurch gekennzeichnet, daß** wenigstens eines der Läutergefäße (3, 4) als liegende Rinne ausgebildet ist.

6. Vorrichtung nach Anspruch 5, **dadurch gekennzeichnet, daß** die Windungen (3.1, 4.1) der Hochfrequenz-Spule wenigstens eines der als Skull-Rinne ausgebildeten Läutergefäßes (3, 4) eine horizontale Wickelachse aufweisen.

7. Verfahren für das Läutern von Glasschmelzen zur Herstellung von Gläsern oder Glaskeramiken;
wobei die Substanzen zunächst eingeschmolzen werden und die Schmelze geläutert wird,
wobei die Läuterung in einer Läuterkaskade aus zwei oder mehreren Stufen erfolgt, wobei die Läuterung in wenigstens eine dieser Stufen nach dem Skull-Prinzip mit induktiver Beheizung der Schmelze durch Einstrahlen von Hochfrequenzenergie erfolgt.

8. Verfahren nach Anspruch 7, **dadurch gekennzeichnet, daß** die Läuterung in den einzelnen Läuteraggregaten bei Temperaturen im Bereich von 1600°C bis 2800°C, vorzugsweise im Bereich von 1800°C bis 2400°C erfolgt.

9. Verfahren nach einem der Anprüche 7 oder 8, **dadurch gekennzeichnet, daß** die Läuterung in Skulltiegeln erfolgt, die von der Schmelze von unten nach oben durchströmt werden.

10. Verfahren nach einem der Ansprüche 7 bis 9, **dadurch gekennzeichnet, daß** in einer ersten Stufe die Läuterung nach dem Skull-Prinzip durchgeführt wird, daß die Schmelze dabei von unten nach oben strömt, und daß die Schmelze sodann in einer zweiten Läuterstufe eine horizontale, hochfrequenzenergiebeheizte Skull-Läuterrinne durchströmt.

11. Verfahren nach Anspruch 7 oder 8, **dadurch gekennzeichnet, daß** die Schmelze durch zwei hintereinander geschaltete Läuterrinnen hindurchgeführt wird.

12. Verfahren nach einem der Ansprüche 7 bis 11, **dadurch gekennzeichnet, daß** während oder zwischen den einzelnen Läuterstufen ein Sauerstoff-Bubbling erfolgt, um die Redox-Läutermittel aufzuoxidieren und für die nachfolgende Läuterstufe zu reaktivieren.

13. Verfahren nach einem der Ansprüche 7 bis 12, **dadurch gekennzeichnet, daß** während oder zwischen den einzelnen Läuterstufen ein Redoxläutermittel oder ein Verdampfungslaütermittel zugeführt wird.

14. Verfahren nach einem der Ansprüche 7 bis 12, **gekennzeichnet durch** die folgenden Merkmale:
14.1 Der Schmelze werden zwei verschiedene Läutermittel A und B zugeführt;
14.2 in der ersten Läuterstufe wird das Läutermittel A aktiviert;
14.3 in der zweiten Läuterstufe wird das Läutermittel B aktiviert;
14.4 die Läutergasabgabe von A erfolgt bei niedrigeren Temperaturen als diejenige von B;
14.5 die erste Läuterstufe wird im Temperaturbereich der maximalen Läutergasabgabe von A betrieben;
14.6 die zweite Läuterstufe wird im Temperaturbereich der maximalen Läutergasabgabe von B betrieben.

## Claims

1. An apparatus for the refining of glass melts for producing glass and glass ceramics, comprising a melting end (1) and a refining cascade with at least two refining vessels (3, 4) which are provided downstream of the melting end (1), with at least one of the refining vessels being configured according to the skull principle and thus made up of a plurality of cooled metal pipes and a high-frequency device for inductively feeding high-frequency energy into the content of the refining vessel.

2. An apparatus according to claim 1, **characterized in that** at least one of the refining vessels (3, 4) is a standing skull crucible.

3. An apparatus according to claim 1 or 2, **characterized in that** the connecting duct (2) between the melting end (1) and the downstream refining vessel (3) opens into the floor region of the downstream refining vessel (3).

4. An apparatus according to one of the claims 1 to 3, **characterized in that** the connecting duct between two successive refining vessels (3, 4) is connected to the upper region of the upstream refining vessel (3) and opens into the floor region of the next upstream refining vessel (4).

5. An apparatus according to one of the claims 1 to 4, **characterized in that** at least one of the refining vessels (3, 4) is configured as a horizontal groove.

6. An apparatus according to claim 5, **characterized in that** the windings (3.1, 4.1) of the high-frequency coil of at least one of the refining vessels (3, 4) configured as a skull groove has a horizontal winding axis.

7. A method for refining glass melts for producing glass or glass ceramics, with the substances being molten at first and the melt is refined, with the refining occurring in a refining cascade consisting of two or more stages, with the refining occurring in at least one of these stages according to the skull principle with inductive heating of the melt by irradiation with high-frequency energy.

8. A method according to claim 7, **characterized in that** the refining in the individual refining units occurs at temperatures in the range of 1600°C to 2800°C, preferably in the range of 1800°C to 2400°C.

9. A method according to one of the claims 7 or 8, **characterized in that** the refining occurs in skull crucibles which are flowed through by the melt upwardly from below.

10. A method according to one of the claims 7 to 9, **characterized in that** in a first stage the refining is carried out according to the skull principle, that the flow thereby flows upwardly from below, and that the melt thereafter flows in a second refining stage through a horizontal skull refining groove heated with high-frequency energy.

11. A method according to claim 7 or 8, **characterized in that** the melt is carried out by two successively disposed refining grooves.

12. A method according to one of the claims 7 to 11, **characterized in that** an oxygen bubbling occurs during or between the individual refining stages in order to oxidize to higher valence the redox refining agents and reactivate them for the subsequent refining stage.

13. A method according to one of the claims 7 to 12, **characterized in that** a redox refining agent or an evaporating refining agent is added during or between the individual refining stages.

14. A method according to one of the claims 7 to 12, **characterized by** the following features:
14.1 two different refining agents A and B are supplied to the melt;
14.2 refining agent A is activated in the first refining stage;
14.3 refining agent B is activated in the second refining stage;
14.4 the emission of refining gas of A occurs at lower temperatures than that of B;
14.5 the first refining stage is operated in the temperature range of the maximum refining gas emission of A;
14.6 the second refining stage is operated in the temperature range of the maximum refining gas emission of B.

## Revendications

1. Dispositif pour l'affinage de verre en fusion destiné à la réalisation de verres et de vitrocéramique ;
avec une cuve de fusion (1) et
avec au moins deux pots d'affinage (3, 4) montés en cascade en aval de la cuve de fusion (1) ;
au moins un des pots d'affinage étant construit selon le principe Skull et par conséquent à partir d'une pluralité de tubes métalliques réfrigérés ainsi que d'un dispositif à haute fréquence destiné à induire de l'énergie à haute fréquence dans le contenu du pot d'affinage.

2. Dispositif selon la revendication 1, **caractérisé en ce qu'**au moins un des pots d'affinage (3, 4) est un creuset vertical de type Skull.

3. Dispositif selon la revendication 1 ou 2, **caractérisé en ce que** la conduite de liaison (2) entre la cuve de fusion (1) et le pot d'affinage (3) monté en aval débouche dans la partie basse du pot d'affinage (3) monté en aval.

4. Dispositif selon l'une quelconque des revendications 1 à 3, **caractérisé en ce que** la conduite de liaison entre deux pots d'affinage (3, 4) consécutifs est raccordée à la partie haute du pot d'affinage (3) monté en amont et débouche dans la partie basse du prochain pot d'affinage (4) monté en amont.

5. Dispositif selon l'une quelconque des revendications 1 à 4, **caractérisé en ce qu'**au moins un des pots d'affinage (3, 4) est conformé en forme de rigole horizontale.

6. Dispositif selon la revendication 5, **caractérisé en ce que** les enroulements (3.1, 4.1) de la bobine à haute fréquence d'au moins un des pots d'affinage (3, 4) conformés en forme de rigole Skull comportent un axe d'enroulement horizontal.

7. Procédé pour l'affinage de verre en fusion destiné à la réalisation de verres et de vitrocéramique ;
selon lequel on fait tout d'abord fondre les substances et on affine la masse en fusion,
l'affinage étant effectué sur deux ou plusieurs stades d'affinage montés en cascade, l'affinage étant effectué à au moins un de ces stades selon le principe Skull selon lequel on chauffe la masse en fusion par induction en l'irradiant d'énergie à haute fréquence.

8. Procédé selon la revendication 7, **caractérisé en ce que** l'affinage dans les différents groupes d'affinage est effectué à des températures comprises entre 1 600 °C et 2 800 °C, de préférence entre 1 800 °C et 2 400 °C.

9. Procédé selon l'une quelconque des revendications 7 ou 8, **caractérisé en ce que** l'on procède à l'affinage dans des creusets de type Skull au travers desquels on fait passer la masse en fusion du bas vers le haut.

10. Procédé selon l'une quelconque des revendications 7 à 9, **caractérisé en ce que**, à un premier stade, on procède à l'affinage selon le principe Skull, que l'on fait couler la masse en fusion du bas vers le haut et que l'on fait ensuite, à un deuxième stade d'affinage, passer la masse en fusion au travers d'une rigole d'affinage horizontale de type Skull chauffée par de l'énergie à haute fréquence.

11. Procédé selon la revendication 7 ou 8, **caractérisé en ce que** l'on fait passer la masse en fusion à travers deux rigoles d'affinage montées l'une derrière l'autre.

12. Procédé selon l'une quelconque des revendications 7 à 11, **caractérisé en ce que** l'on effectue une oxygénation par bulles pendant ou entre les différents stades d'affinage afin d'oxyder les agents d'affinage rédox et de les réactiver pour le prochain stade d'affinage.

13. Procédé selon l'une quelconque des revendications 7 à 12, **caractérisé en ce que** l'on rajoute pendant ou entre les différents stades d'affinage un agent d'affinage rédox ou un agent d'affinage par évaporation.

14. Procédé selon l'une quelconque des revendications 7 à 12, **caractérisé par** les particularités suivantes :
14.1 on rajoute à la masse en fusion deux agents d'affinage A et B différents ;
14.2 on active l'agent d'affinage A au premier stade d'affinage ;
14.3 on active l'agent d'affinage B au deuxième stade d'affinage ;
14.4 le gaz d'affinage de A est émis à des températures inférieures à celles du gaz d'affinage de B ;
14.5 le premier stade d'affinage est mis en oeuvre dans la plage de température de l'émission maximale du gaz d'affinage de A ;
14.6 le deuxième stade d'affinage est mis en oeuvre dans la plage de température de l'émission maximale du gaz d'affinage de B.
